(19) Europäisches Patentamt

European Patent Office

Office européen des brevets

(11) **EP 1 276 328 B1**

(12) **EUROPEAN PATENT SPECIFICATION**

(45) Date of publication and mention of the grant of the patent:
**18.03.2015 Bulletin 2015/12**

(51) Int Cl.:
***H04N 19/00*** *(2014.01)*

(21) Application number: **02013240.3**

(22) Date of filing: **17.06.2002**

(54) **Watermarking in video transmissions**

Wasserzeichen für Videoübertragung

Filigrane pour transmission de vidéo

(84) Designated Contracting States:
**AT BE CH CY DE DK ES FI FR GR IE IT LI LU MC NL PT SE TR**

(30) Priority: **13.07.2001 GB 0117079**

(43) Date of publication of application:
**15.01.2003 Bulletin 2003/03**

(73) Proprietor: **Motorola Mobility LLC Libertyville, IL 60048 (US)**

(72) Inventors:
- **Hare, Jonathan Tadley,
Hampshire RG26 3UA (GB)**
- **Hobson, Paola Marcella Alton,
Hampshire GU34 2SQ (GB)**
- **Dolbear, Catherine Mary Reading,
Berkshire RG31 7HW (GB)**

(74) Representative: **Boult Wade Tennant
Verulam Gardens
70 Gray's Inn Road
London WC1X 8BT (GB)**

(56) References cited:
**WO-A-00/57643    WO-A-02/32031**

- **AREEPONGSA S ET AL: "Steganography for a low bit-rate wavelet based image coder" IMAGE PROCESSING, 2000. PROCEEDINGS. 2000 INTERNATIONAL CONFERENCE ON, vol. 1, 10 September 2000 (2000-09-10), pages 597-600, XP010530685**

- **PATENT ABSTRACTS OF JAPAN vol. 2000, no. 09, 13 October 2000 (2000-10-13) & JP 2000 175161 A (KDD CORP), 23 June 2000 (2000-06-23) & DATABASE WPI Week 2000 Derwent Publications Ltd., London, GB; AN 2000-470969**

- **LIN C-Y ET AL: "ISSUES AND SOLUTIONS FOR AUTHENTICATING MPEG VIDEO" PROCEEDINGS OF THE SPIE, SPIE, BELLINGHAM, VA, US, vol. 3657, 25 January 1999 (1999-01-25), pages 54-65, XP000949137 ISSN: 0277-786X**

- **INTAEK KIM ET AL: "An improved tamper-detection method for digtal images" INDUSTRIAL ELECTRONICS, 2001. PROCEEDINGS. ISIE 2001. IEEE INTERNATIONAL SYMPOSIUM ON, vol. 1, 12 June 2001 (2001-06-12), pages 227-231, XP010549011**

- **TOSUN A S ET AL: "Efficient multi-layer coding and encryption of MPEG video streams" MULTIMEDIA AND EXPO, 2000. ICME 2000. 2000 IEEE INTERNATIONAL CONFERENCE ON NEW YORK, NY, USA 30 JULY-2 AUG. 2000, PISCATAWAY, NJ, USA,IEEE, US, 30 July 2000 (2000-07-30), pages 119-122, XP010511416 ISBN: 0-7803-6536-4**

- **KUNDUR D ET AL: "Attack characterization for effective watermarking" IMAGE PROCESSING, 1999. ICIP 99. PROCEEDINGS. 1999 INTERNATIONAL CONFERENCE ON KOBE, JAPAN 24-28 OCT. 1999, PISCATAWAY, NJ, USA, IEEE, US, vol. 2, 24 October 1999 (1999-10-24), pages 240-244, XP010369109 ISBN: 0-7803-5467-2**

EP 1 276 328 B1

- KUNDUR D ET AL: "Towards a telltale watermarking technique for tamper-proofing" IMAGE PROCESSING, 1998. ICIP 98. PROCEEDINGS. 1998 INTERNATIONAL CONFERENCE ON CHICAGO, IL, USA 4-7 OCT. 1998, LOS ALAMITOS, CA, USA,IEEE COMPUT. SOC, US, vol. 2, 4 October 1998 (1998-10-04), pages 409-413, XP010308517 ISBN: 0-8186-8821-1
- LIN E T ET AL: "A Review of Fragile Image Watermarks" IN PROC. OF THE MULTIMEDIA AND SECURITY WORKSHOP, ACM MULTIMEDIA '99, 1999, pages 25-29, XP002319576
- FRIDRICH J: "Image watermarking for tamper detection" IMAGE PROCESSING, 1998. ICIP 98. PROCEEDINGS. 1998 INTERNATIONAL CONFERENCE ON CHICAGO, IL, USA 4-7 OCT. 1998, LOS ALAMITOS, CA, USA,IEEE COMPUT. SOC, US, vol. 2, 4 October 1998 (1998-10-04), pages 404-408, XP010308634 ISBN: 0-8186-8821-1

**Description**

Field of the Invention

This invention relates to video transmission systems and video encoding/decoding techniques and, in particular, to watermarking of video transmissions to enable tampering of the video transmission to be detected. The invention is applicable to, but not limited to, a video compression system where the video has been compressed using a scalable compression method.

Background of the Invention

Video is transmitted as a series of still images/pictures. Since the quality of a video signal can be affected during coding or compression of the video signal, it is known to include additional "layers" of transmission, based on the difference between the video signal and the encoded video bit stream, to enhance the quality of the received signal following decoding and/or decompression. Hence, a hierarchy of pictures and enhancement pictures partitioned into one or more layers is used, thereby resulting in a layered video bit stream being produced.
A scalable video bit stream refers to the ability to transmit and receive video signals of more than one resolution and/or quality simultaneously. A scalable video bit stream is one that may be decoded at different rates, according to the bandwidth available at the decoder. This enables the user with access to a higher bandwidth channel to decode high quality video, whilst a lower bandwidth user is still able to view the same video, albeit at a lower quality.
The main reason that scalable video transmissions are used is for systems where multiple decoders with access to differing bandwidths are receiving images from a single encoder.
In a layered scalable video bit stream, enhancements to the video signal may be added to the base layer either by:

(i) increasing the resolution of the picture (spatial scalability) ;
(ii) including error information to improve the Signal to Noise Ratio of the picture (SNR scalability) or
(iii) including extra pictures to increase the frame rate (temporal scalability).

The term "hybrid scalability" implies using more than one of these types of scalable enhancements in the encoding of the video stream.
Such enhancements may be applied to the whole picture, or to an arbitrarily shaped object within the picture, which is termed object-based scalability. In order to preserve the disposable nature of the temporal enhancement layer, the H.263+ standard dictates that pictures included in the temporal scalability mode must be bi-directionally predicted (B) pictures.
If a three layer video bit stream is used, the base layer (layer 1) will include intra-coded pictures (I pictures) sampled, coded or compressed from the original video signal pictures, and a plurality of predicted inter-coded pictures (P pictures). In the enhancement layers (layers 2 or 3 or more), three types of picture may be used for scalability: bi-directionally predicted (B) pictures; enhanced intra (EI) pictures; and enhanced predicted (EP) pictures.
The three basic known methods of scalability will now be explained.

(i) Temporal Scalability

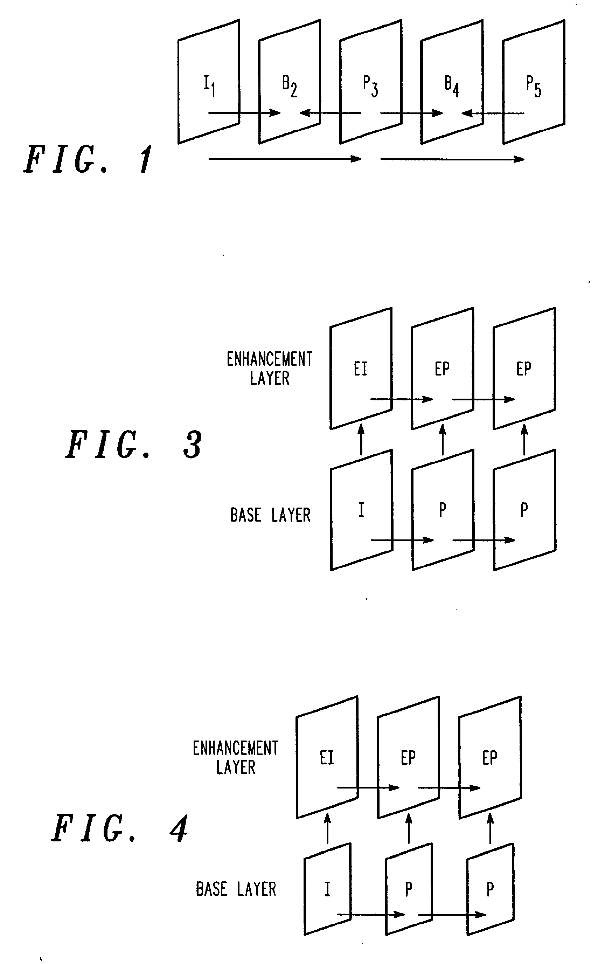

Temporal scalability is achieved using bi-directionally predicted pictures, or B-pictures. B-pictures are predicted from previous and subsequent reconstructed pictures in the reference layer. Such reconstructed pictures generally result in improved compression efficiency as compared to that of P pictures. B pictures are not used as reference pictures for the prediction of any other pictures. This allows for B-pictures to be discarded if necessary without adversely affecting any subsequent pictures, thus providing temporal scalability. FIG. 1 illustrates the predictive structure of P and B pictures.

(ii) SNR Scalability

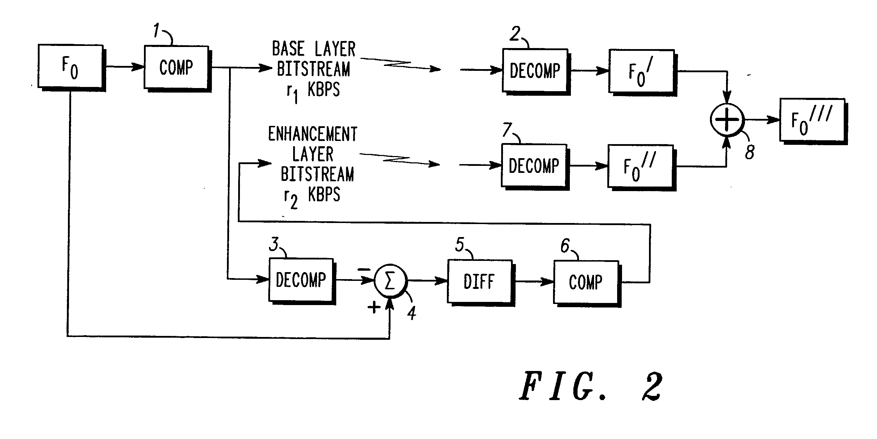

A second method to achieve scalability is through spatial/SNR enhancement. Spatial scalability and SNR scalability are equivalent, except for the use of interpolation as is described shortly. SNR scalability refers to the process of improving the picture signal-to-noise-ratio (PSNR) of a base layer picture, by including additional error information in one or more enhancement layers.
Because compression introduces artefacts and distortions into the video stream, the difference between a reconstructed picture and its original in the encoder is (nearly always) a non-zero-valued picture, containing what is generally termed the coding error. Normally, this coding error is lost at the encoder and never recovered.
With SNR scalability, such coding error pictures can also be encoded and sent to the decoder, as shown in FIG. 2, producing an enhancement to the decoded picture. This additional error information may be used to either:

  (i) increase the spatial quality of the still or video image, or
  (ii) increase the spatial resolution of the picture (known as spatial scalability),

and in both cases may be encoded in Enhancement Intra (EI) or Enhancement Predicted (EP) pictures - hence the term SNR scalability.

FIG. 3 illustrates the data flow for SNR scalability. The vertical arrows from the lower layer illustrate that the picture in the enhancement layer is predicted from a reconstructed approximation of that picture in the reference (lower) layer.

FIG. 2 shows a schematic representation of an apparatus for conducting SNR scalability. In FIG. 2, a video picture $F_0$ is compressed and discrete cosine transformed, as is known in the art, at 1 to produce the base layer bit stream signal to be transmitted at a rate $r_1$ kbits per second (kbps). This signal is decompressed at 2 to produce the reconstructed base layer picture $F_0'$.

The compressed base layer bit stream is also decompressed at 3 and compared with the original picture $F_0$ at 4 to produce a difference signal 5. This difference signal is compressed at 6 and transmitted as the enhancement layer bit stream at a rate $r_2$ kbps. This enhancement layer bit stream is decompressed at 7 to produce the enhancement layer picture $F_0''$ which is added to the reconstructed base layer picture $F_0'$ at 8 to produce the final reconstructed picture $F_0'''$.

If prediction is only formed from the lower layer, then the enhancement layer picture is referred to as an EI picture. It is possible, however, to create a modified bi-directionally predicted picture using both a prior enhancement layer picture and a temporally simultaneous lower layer reference picture. This type of picture is referred to as an EP picture or "Enhancement" P-picture. The prediction flow for EI and EP pictures is shown in FIG. 3. (Although not specifically shown in FIG. 3, an EI picture in an enhancement layer may have a P picture as its lower layer reference picture, and an EP picture may have an I picture as its lower-layer enhancement picture.)

For both EI and EP pictures, the prediction from the reference layer uses no motion vectors. However, as with normal P pictures, EP pictures use motion vectors when predicting from their temporally, prior-reference picture in the same layer.

(iii) Spatial Scalability

The third well-known scalability method is spatial scalability, which is closely related to SNR scalability. The only difference is that before the picture in the reference layer is used to predict the picture in the spatial enhancement layer, it is interpolated by a factor of two either horizontally or vertically (1-D spatial scalability), or both horizontally and vertically (2-D spatial scalability). Spatial scalability is shown in FIG. 4.

In the field of this invention, it is known that individual images/pictures, or a series of images say, in a transmitted video stream, may be tampered with. It is also known that a need exists to protect such images or video stream from such undesirable tampering. One known technique employed to protect still images or documents is by the use of "watermarks".

Ruanaidh, Dowling and Boland "Perceptual Watermarks of Digital Images", Proceedings of the IEEE INTCONF Image Processing, describes a technique for watermarking digital I frames in an MPEG sequence.

In image watermarking, a known binary pattern or signature is embedded into an image at the moment of image acquisition. Such watermarks are termed "robust", because they are designed to remain intact regardless of any post-processing of the image such as filtering, cropping, etc.

While such watermarks do provide a useful degree of protection to still images, they cannot, at present, be wholly relied upon to protect other forms, for example documents.

As a digital video stream is a series of digital images, the concept of watermarking still images has been considered for extension to video technology. R. Wolfgang, C. Podilchuk and E. Delp - "Perceptual Watermarks of Digital Images", Proceedings of the IEEE INTCONF Image Processing - describes a technique for watermarking discrete cosine transform (DCT) block-based video, namely digital I frames in an MPEG sequence. This paper describes the concept of embedding a watermark into an image in the transform domain (e.g. using DCT or wavelet coefficients). After the appropriate transform has been applied to the image (e.g. block based DCT), a coefficient X(u,v) is modified according to the following equation:

$$Y(u,v) = X(u,v) + J(u,v)W(u,v) \qquad [1]$$

$$\text{if } |X(u,v)| > J(u,v) \qquad\qquad [2]$$

$$\text{else } Y(u,v) = X(u,v) \qquad\qquad [3]$$

Where W(u,v) is the watermark sequence and J(u,v) is a parameter indicating the "just noticeable difference" for each transform coefficient. This method only allows detection of the presence of the watermark, and requires the original image for detection.

In the scenario of a scalable video system where the base layer is freely available, but the enhancement layer requires extra capacity, there lies a need to be able to protect the enhancement layer from unlawful copying and distribution. For example, there could be a case where both the base and enhancement layers have been obtained legitimately, and have been recombined, but then illegally distributed.

The inventors of the present invention believe that no work has previously been carried out in the area of watermarking scalable video other than by Motorola. Furthermore, to the inventors' knowledge, no work has been carried out on tamper evidence for scalable video other than by Motorola.

A study has been carried out on tamper evidence and authentication of MPEG video by C Lin & S Chang - "Issues and Solutions for Authenticating MPEG Video", SPIE Security and Watermarking of Multimedia Contents, EI '99, San Jose, CA. This tamper evidence technique cannot be applied to SNR scalable video as it would inherently destroy any visual improvements that the SNR enhancement layer brings. Also, this technique does not assess the full range of attacks that could take place, but only cut and paste operations within the frames.

Consequently, the technique fails to resolve the problems in a scalable video system where the base layer is freely available, but the enhancement layer requires extra capacity. In such a system, there lies a need to be able to protect the enhancement layer from tampering.

A further consideration to a video transmission system designer is that if a pirate is aware that the video sequence is watermarked, (s)he may try to attack the whole sequence as to render the watermark impossible to recover. If, later, the tampering is discovered, it would be required to demonstrate whether the illegally distributed sequences have the watermark present. This would be accomplished by recovering the watermark or at least demonstrating that the watermark is still partially present within the sequence, but that recovery has been made impossible by any attacks carried out on the sequence.

In the scenario where the scalable video is being used for say, a surveillance system, it may be required to prove that what is shown on the video sequence did actually occur, and that no tampering took place. If tampering did occur, it may be required to demonstrate the exact locations in the sequence that had been tampered with.

Protection of digital media (including image and video) has also become a key standardisation topic within the multimedia industry over the last year. Police users have formally stated that they do not see a possibility of using digitally transmitted and processed images for evidential purposes without the existence of reliable tamper detection methods. The European Broadcasting Union has issued a second call for systems for watermarking multimedia for entertainment applications. In addition, MPEG has started a new working group called MPEG21, whose essential function relies on digital rights management, which includes authentication of multimedia data.

In summary, there exists a need in the field of video transmission, and in particular in video transmissions that require authentication of the video image, for an improved arrangement of detecting and quantifying any tampering of a video sequence or image, where the abovementioned disadvantages with prior art arrangements may be alleviated. Furthermore, if such tampering is found, there is a need to localise and classify the tampering attack.

Published patent applications known to the applicant include GB-A-2335816, GB-A-2351405 and JP-A-2000175161 (KDD Corp.), which has WPI abstract Accession No. 2000-470969.

Statement of Invention

In accordance with a first aspect of the present invention there is provided a method for testing a presence of a watermark in a scalable video sequence, as claimed in claim 1. In accordance with a second aspect of the present invention there is provided a video communication unit, as claimed in claim 14. In accordance with a third aspect of the present invention there is provided a mobile radio device comprising the aforementioned video communication unit, as claimed in claim 16. In accordance with a fourth aspect of the present invention there is provided a video transmission system, as claimed in claim 17.

Brief Description of the Drawings

FIG. 1 is a schematic illustration of a known scalable video arrangement showing B picture prediction dependencies.
FIG. 2 is a schematic representation of a known scalable video arrangement for undertaking SNR scalability.
FIG. 3 is a schematic illustration of a known scalable video arrangement showing a base layer and an enhancement layer produced using SNR scalability.
FIG. 4 is a schematic illustration of a known scalable video arrangement showing a base layer and an enhancement layer produced using spatial scalability. Exemplary embodiments of the present invention will now be described, with reference to the accompanying drawings, in which:
FIG. 5 shows a flowchart of a method for detecting the tampering of a watermarked video signal, in accordance with a preferred embodiment of the present invention.
FIG. 6 shows a flowchart of a method for detecting the tampering of a watermarked video signal using a statistical mean/variance test, in accordance with a preferred embodiment of the present invention.
FIG. 7 shows a flowchart of a method for detecting the tampering of a watermarked video signal using a peak comparison test, in accordance with a preferred embodiment of the present invention.
FIG. 8 shows two graphs of frequency distribution of 990 Coefficients: graph 8a for un-watermarked coefficients and graph 8b watermarked coefficients, used in a method for detecting the tampering of a watermarked video signal, in accordance with a preferred embodiment of the present invention.
FIG. 9 shows a graph highlighting the effect of high-pass filtering on the frequency distribution of 990 Coefficients, in accordance with a preferred embodiment of the present invention.
FIG. 10 shows a graph highlighting the effect of low-pass filtering on the frequency distribution of 990 Coefficients, in accordance with a preferred embodiment of the present invention.
FIG. 11 shows a graph highlighting the effect of resampling/cropping and re-sampling type attacks on the frequency distribution of 990 Coefficients, in accordance with a preferred embodiment of the present invention.
FIG. 12 shows a graph highlighting the effect of common non-linear filtering attacks on the frequency distribution of 990 Coefficients, in accordance with a preferred embodiment of the present invention.

Description of Preferred Embodiments

This invention applies to both SNR and spatial scalable encoded video, although the description that follows refers mainly to SNR scalability for convenience. The inventive concepts herein described find particular application in the current MPEG technology arena developing a standard watermarking system for video use. The detection of tampering and the ability to determine what type of tampering has taken place are necessary steps in ensuring user confidence in the images and videos that they are viewing in an increasingly hostile multimedia communication environment.

In summary, the preferred embodiment of this invention uses a series of new tests to make a decision as to whether the scalable video sequence has been tampered with. In addition, the tests are designed to provide a good estimate as to the type of attack/tampering performed and the location of the attack (whether it be the whole video sequence or a single frame).

Estimation of the type of attack is necessary so as not to confuse an attack with a legitimate enhancement of the sequence, e.g., by high-pass filtering to bring out small details in each image.

The first two tests, namely the statistical mean/variance test and peak comparison test have the useful side effect that they provide a quick way of verifying the presence of the watermark without requiring a "key" to extract the watermark.

The tests provide further benefit in that they do not disclose any information about the location or contents of the watermark. Such a benefit is consistent with the concept of a 'Public' watermarking system whereby anyone can verify the presence of a watermark, but only the key-holder can extract and read the watermark.

Both of these tests have the same mathematical basis, although the tests themselves are different. These two tests are based on the fact that in an un-watermarked sequence, you would expect there to be as many rounding-down errors as rounding-up errors of the discrete cosine transform (DCT) coefficients in the base layer, due to the quantiser design. This implies that in the enhancement layer, there are as many positive coefficients as negative (assuming coefficients equal to zero are neither positive or negative).

However, using the watermarking system according to the preferred embodiment of the present invention, the relationship changes slightly, inasmuch as there are slightly more positive coefficients than negative. The two tests use this principle to decide on the presence of a watermark.

Known video formats include common intermediate format (CIF) and quarter common intermediate format (QCIF). A QCIF image has 99 macro-blocks, each comprising four (8*8) blocks.

In the preferred embodiment of the present invention, in each frame of a watermarked QCIF video there are 396 watermarked coefficients (one per 8*8 block). Indeed, it is within the contemplation of the invention that any number up to 396 coefficients may be used. However, for a typical QCIF image, in accordance with the preferred embodiment of the invention, the watermark may have a length of 99 binary bits, with the 99 binary bits perhaps representing a 9*11 binary image, repeated 4 times.

There are ten possible locations for these coefficients in each 8*8 block (actual location chosen by a user key and random number generator). The inputs for both tests are the ten possibly watermarked coefficients from each 8*8 DCT block within each frame in the sequence.

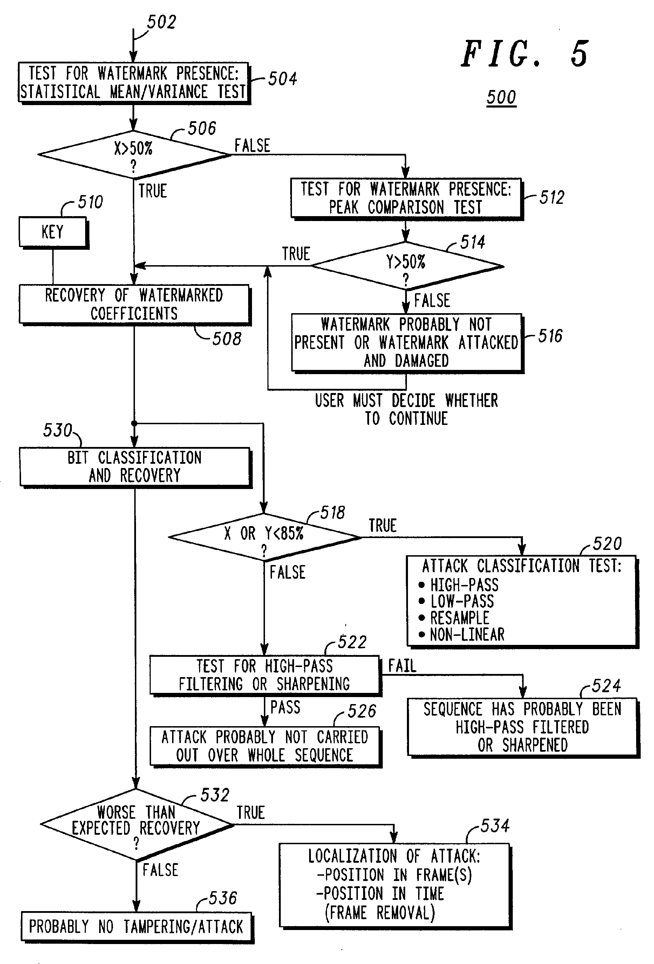

Referring first to FIG. 5, a flowchart 500 of a method for detecting the tampering of a watermarked video signal is shown, in accordance with a preferred embodiment of the present invention. In particular, the block diagram demonstrates the ordering of a series of new tests, in order to make a decision as to whether the scalable video sequence has been tampered with.

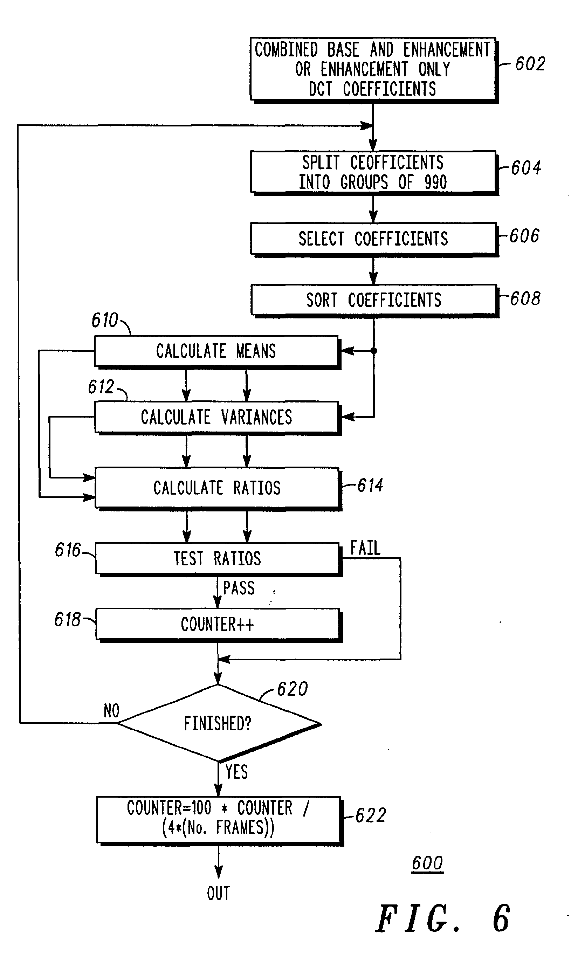

An input video signal 502, having been passed through a discrete cosine transform function (not shown), is received and a determination is required as to whether the video signal has been tampered with. The video signal is applied to a statistical mean/variance test 504 that tests for the presence of a watermark. This test is described in greater detail with regard to FIG. 6.

The output from the statistical mean/variance test 504 produces "X", which is the probability that the sequence has been watermarked. In each frame of the watermarked QCIF video data stream, a statistical mean/variance decision is made, as shown in step 506. This decision primarily checks to see if the result from the mean/variance test is greater than 50%. If the result is greater than 50%, the sequence is assumed to contain a watermark and the second test for a presence of a watermark may be skipped. If there are more positive coefficients (X > 50%) in the ten times 396 watermarked coefficients in step 506, then the watermarked coefficients are recovered in step 508 using a key 510.

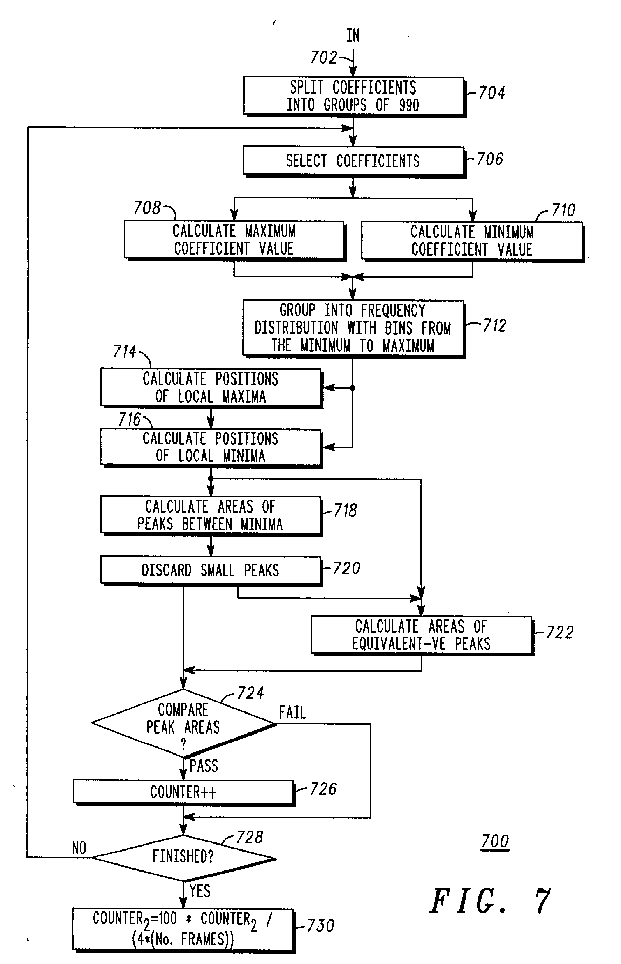

If there are not more positive coefficients in the ten times 396 watermarked coefficients in step 506, then a second test for the presence of a watermark is preferably performed using the peak comparison test, as shown in step 512. Clearly, a skilled artisan would recognise that if there were more negative coefficients, an attack is likely to have been made. This test is described in greater detail with respect to FIG. 7.

If the peak comparison decision yields a (Y>50%) result in step 514, then recovery of the watermarked coefficients is performed, as shown in step 508, using the key 510. The output from the peak comparison test 512 produces "Y" which is the probability that the sequence has been watermarked. If the peak comparison test fails to yield a (Y>50%) result, then it is assumed that a watermark is probably not present, or the watermark has been attacked and is damaged, as in step 516.

This decision basically checks to see if the result from the peak comparison test is over 50%. If the result is over 50%, the image is assumed to contain a watermark. If the result is under 50%, the image is assumed to either not contain a watermark, or have had a major attack to the watermark, resulting in poor recoverability.

If the sequence fails this test, the user may decide whether to continue with the testing, as shown in step 508, using the key 510. In most cases the testing should continue, because, it is possible that evidence that the sequence originally contained a watermark can be gained from attempting to recover the watermark in step 508, and looking at the recovered watermark patterns.

The operation of recovering the watermarked coefficients, in step 508, is identical to the recovery of the watermarked coefficients as defined by the watermarking method. Given the user key 510 that was used in the embedding of an original watermark in the encoder, a number is generated between one and ten for every 8*8 block in the sequence. Although the preferred embodiment of the present invention is described with reference to using up to ten coefficients within each 8*8 block, a skilled artisan will recognise that the inventive concepts described herein could clearly apply to other configurations.

This number corresponds to a location of the watermarked coefficient in the block. The watermarked coefficients can thus be read by selecting the correct coefficient from each block based on the numbers generated from the key 510.

If, after performing the statistical mean/variance test 504 and possibly the peak comparison test 512, the recovery of the watermarked coefficients is performed. A whole sequence attack determination is made by determining whether (X or Y) <85%, as shown in step 518.

The whole sequence attack determination, in step 518, is performed to decide whether the whole sequence has been filtered. The test is simple and basically checks to see whether the "X" or "Y" result from the peak comparison test of step 512, or the mean/variance test 504 (if the peak comparison test 512 was not performed where "X" is the only test result available) is over a certain threshold. Experiments have shown that a preferred threshold value of 85% works well, as shown in Table 1.

If the result is over this threshold, then this implies that there was either not an attack, or there was a high-pass filter type attack, to the whole sequence. If this determination of (X or Y) < 85% is found to be true, then an attack classification test is performed, as shown in step 520, to classify the kind of attack.

The classification process involves taking the 99 recovered coefficients from each repeat of the watermark, and grouping them into a frequency distribution. By assessing the shape of the distribution, the type of attack can be classified into one of; high-pass, low-pass, re-sample/crop and re-sample, or non-linear. The effect on the frequency distribution of each of these attack classifications is described below with reference to FIG's 9 to 12.

High-pass:

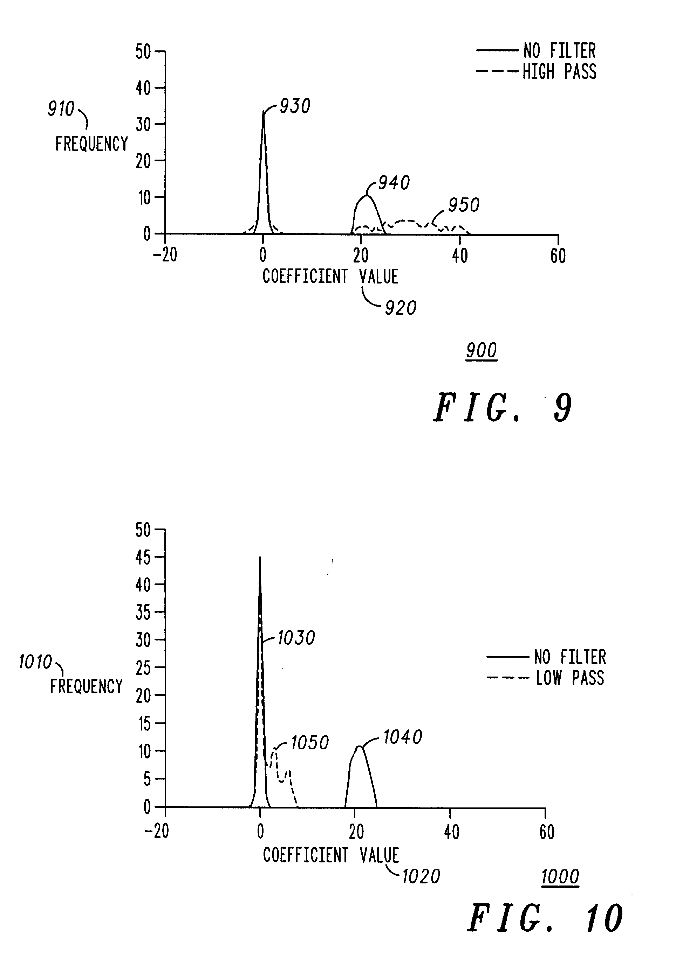

The high-pass filter attack can be modelled by taking each DCT coefficient and multiplying it by some variable, based on the respective frequency of the coefficient, and then adding it back to itself. FIG. 9 shows a graph 900 highlighting the effect of high-pass filtering on the frequency distribution of 990 coefficients, in accordance with a preferred embodiment of the present invention. The graph 900 shows frequency distribution 910 plotted against coefficient value 920, with the primary distribution of values 930 being centred around "zero". As can be seen, the filter has the effect of increasing the range of the frequency distribution response 950, compared to the non-filtered values 940, as illustrated.

Low-pass:

The low-pass filter has the opposite effect of the high-pass filter, and causes the data to bunch up, thereby reducing the frequency distribution range. FIG. 10 shows a graph 1000 highlighting the effect of low-pass filtering on the frequency distribution of 990 coefficients, in accordance with a preferred embodiment of the present invention. The graph 1000 shows frequency distribution 1010 plotted against coefficient value 1020, with the primary distribution of values 1030 being centred around "zero".
As can be seen, the filter has the effect of decreasing the range of the frequency distribution response 1050, compared to the non-filtered values 1040, as illustrated. If the filter is strong enough, the two peaks 1030 and 1050 may merge into a single peak with sidebands on the positive side, as illustrated in FIG. 10. It is important to note that the height of the peak at "zero" increases dramatically with the application of a low-pass type filter.

Re-sample/Crop and Re-sample attacks:

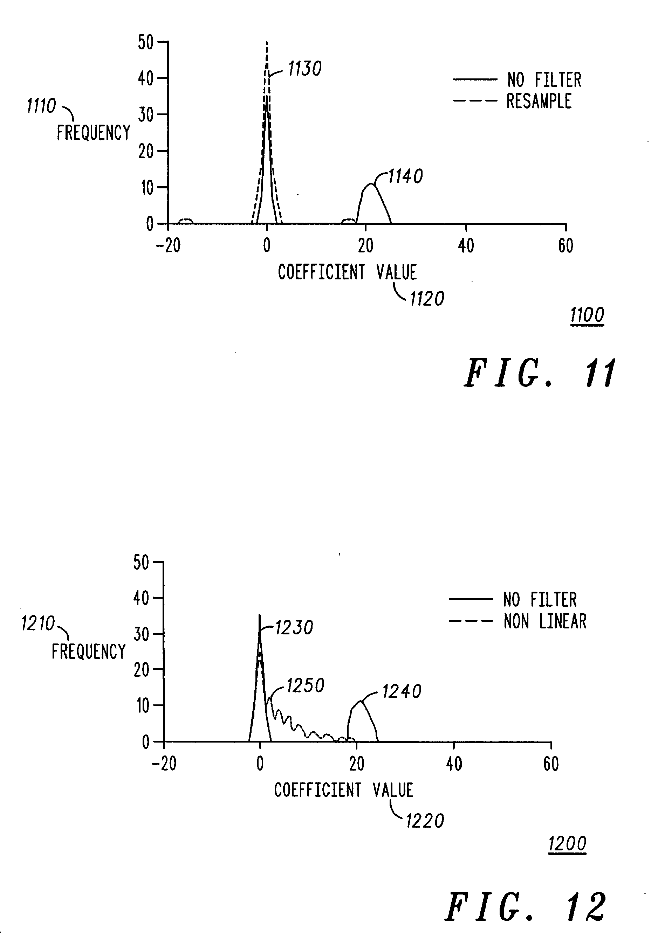

The re-sample/cropping and re-sampling-type attacks are performed by re-sampling each frame to a different size and then back to the original size. Alternatively, each frame is cropped and re-sampling back to the original size. FIG. 11 shows a graph 1100 highlighting the effect of re-sample/cropping and re-sampling-type attacks on the frequency distribution of 990 coefficients, in accordance with a preferred embodiment of the present invention.
The graph 1100 shows frequency 1110 plotted against coefficient value 1120, with the primary distribution of values 1130 being centred around "zero". As can be seen, the filtering associated with this kind of attack has the effect of jumbling up the coefficients in each block, as shown in response 1150, as compared to the non-filtered values 1140. The primary indication is that they appear not to contain a watermark. Hence, one can readily classify an attack as a re-sample/crop type attack when locations of the peaks in the frequency distribution of the coefficients are differently distributed to that expected.

Non-linear filtering:

Referring now to FIG. 12, a graph 1200 highlighting the effect of non-linear filtering on the frequency distribution of 990 coefficients, in accordance with a preferred embodiment of the present invention, is shown.
The graph 1200 shows frequency 1210 plotted against coefficient value 1220, with the primary distribution of values 1230 being centred around "zero". As can be seen, the effect of a non-linear filter is to create new frequencies within the image, which is seen as a combined grouping and spreading of the frequency distribution as shown in response 1250, as compared to the non-filtered values 1240.
This effect depends upon the filter used. An important characteristic to note is the reduction in height of the peak around "zero", created by the filtered coefficient values. Hence, in summary, one can readily classify an attack as a non-linear attack when peaks in the frequency distribution of the coefficients tend more towards a series of small peaks, with a primary peak located around "zero" being consequently reduced in height/area.
Such a variety of filtering effects ensure that it is virtually impossible to actually recover the whole watermark as the positions of the watermarked coefficients will have moved, and the positions generated by the key no longer match with the watermarked coefficients. However, because the watermarked coefficients are still present, the sequence still passes the peak comparison test for watermark presence.
If the determination of whether (X or Y <85%) in step 518 is found to be false, then a test for high-pass filtering or sharpening is performed, as shown in step 522.
The test for high-pass filtering or sharpening, as shown in step 522, is identical to the test described above for high-pass filtering. The test is only performed if the likelihood is that the sequence either has been high-pass filtered or all of the frames of the video sequence have not been subjected to tampering. If the test indicates that the sequence has not been high-pass filtered, the attack is deemed to have been carried out over less than the whole video sequence, as highlighted in step 526. If high-pass filtering or sharpening is viewed as a legitimate form of enhancement, then this test need not be carried out.

If the video signal is found to fail the high-pass filtering or sharpening test, as shown in step 522, the sequence has probably been high-pass filtered or sharpened, as highlighted in step 524.

Concurrently with the determination of whether (X or Y <85%), a bit classification and recovery test is preferably performed, as shown in step 530.

The bit-classification and recovery operation is performed in the same manner as described in the watermarking recovery method. Basically each coefficient is tested to decide on whether it contains a binary "1" or "0", based on whether the coefficient value lies between certain thresholds, namely whether the coefficient recovery is as expected or worse than expected, as shown in step 532. A means and method for generating an expected value is described in co-pending UK patent application (publication number 0031085.4).

If the coefficient value lies outside the threshold(s), then the bit is said to be in error, as its true value cannot be decided. The binary pattern from each of the four repeats in each frame is combined to give an error-corrected reconstruction of the watermark in that frame.

In order to test the recovery rates of each frame, a method is required that looks at each bit and decides whether it is correct or not. If the original embedded watermark pattern is known, then the recovered watermark from each frame can be subtracted from the original watermark, and the number of bits in error can be summed.

If the original watermark was not available, and each frame in the sequence was watermarked with the same watermark pattern, then a highly accurate representation of the original watermark could be created by combining all of the recovered watermarks within the sequence. This representation of the original watermark could then be used to calculate the bit error rate(s).

If each frame of the sequence were to be watermarked with a different watermark, then the preferred way to calculate an error rate would be to subtract the recovered watermark from each repeat of that watermark in the frame. Again, this could be used to calculate a bit error rate. It is worth noting that this is the most accurate method from the three listed, as a small tamper may not affect the recovered watermark, whilst it would affect one of the repeats.

The bit error rate calculated for each frame must then be compared to expected values, to decide whether the frame may have been tampered with. Based on experimentation, the inventors have found that if the watermark was cast with a strength of "nine", as known to those skilled in the art, then less than one error from the recovered watermark in seventy frames would be expected. Obviously, if the bit error rate (BER) were calculated from the bits in error from the individual repeats, then the expected BER would be higher.

If the recovery is found to be as expected in step 532, it is deemed that the video sequence/video signal has probably not been subjected to an attack or any tampering, as shown in step 536.

However, if the recovery is found to be worse than expected in step 532, it is deemed that the video sequence/video signal has been subjected to an attack or tampering. Preferably, a positioning determination in either the frame or in time is performed to determine the location of the attack in the video sequence/video signal.

If the video sequence started with a good recovery rate, and suddenly dropped to a poor/non-existent recovery rate, it may be assumed that the attacker has removed one or more whole frames (or, possibly inserted frames), causing the actual locations of the watermarked coefficients to become out of synchronisation with the positions predicted by the user key.

This doesn't actually affect any of the tests for the presence of a watermark, as the watermark is still in the sequence, just not in the expected location. In order to find out how many frames the attacker may have removed, 'dummy' frames can be inserted, at the point the recovery dropped off, until the recovery rates return to normal - the number of frames removed by the attacker would be equal to the number of 'dummy' frames.

If the recovery for a certain frame, or frames, is lower than expected, then it may be assumed that the frame or frames have been tampered with. The location of any tampering can be approximated by mapping each watermark bit to its original location within the frame when it was embedded.

Referring now to FIG. 6 a flowchart 600 of a statistical mean/variance test is shown in accordance with a preferred embodiment of the present invention. This test is particularly useful as it is reasonably invariant to certain types of filter, such as a high-pass, or a sharpening filter.

The Statistical mean/variance test in step 504 of FIG. 5 is also fairly simple, in that it requires relatively few passes over the data to obtain the result. The test is based on the fact that if there is no watermark, the variance and absolute mean (abs(mean)) of the negative coefficients should be equal to the variance and the abs(mean) of the positive coefficients. The method is as follows:

The input video signal comprises either a combined 'base' and 'enhancement' layer of the scalable video sequence or an 'enhancement'-only layer. The signal 602 input to the testing function(s) described above is a discrete cosine transform function of this input video signal.

Partitioning of the bit-stream into 'base' plus 'enhancement' is only a viable technique where the transmission or communication system guarantees the reception of the base layer.

The DCT of the video signal 602 is input into a function where the coefficients are split into groups of 990, as shown in step 604. The groups correspond to the ten possibly watermarked coefficients in each block per 99-bit repeat of the watermark.

In the preferred embodiment of the invention, a selected watermark is only applied to the luminance of the enhancement layer. Preferably, each 8 x 8 coefficient block conceals one watermark bit.

As the discrete cosine transform (DCT) is additive:

$$DCT[A] + DCT[B] = DCT[A+B] \qquad [4]$$

any changes to coefficients in the enhancement layer may be determined from a combined 'Base + Enhancement' layer.

Each 8 x 8 DCT coefficient block, comprising 990 coefficients, is then applied to the coefficient selector function, as shown in step 606.

The selected coefficients 606 are then sorted into ascending or descending order, as in step 608. The mean 610 and variance 612 of all the coefficients less than "zero" and greater than "zero" are calculated as shown in equations [5] and [6] below.

$$Mean = \overline{m}_i = \frac{1}{n}\sum x_i \qquad [5]$$

$$Variance = \sigma_i^2 = \frac{\sum (x_i - \overline{m}_i)^2}{n} \qquad [6]$$

The mean of the negative (<"0") side is then divided by the mean of the positive (>"0") side to obtain the ratio of means, as shown in step 614 and equation [7] below.

$$Ratio\ of\ means = \frac{\overline{m}_1}{\overline{m}_2} \qquad [7]$$

The variance of the negative (<"0") side is divided by the variance of the positive (>"0") side to obtain the ratio of variance, as shown in step 614 and equation [8] below.

$$Ratio\ of\ variance = \frac{\sigma_1}{\sigma_2} \qquad [8]$$

If the:

"ratio of means" (in step 614) >= 'A';
where (A~0.6); and
"ratio of variance" <= 'B'

where (B~0.6); when testing the ratios in step 616, then the sequence is assumed to be watermarked. A counter is then incremented, as show in step 618 and equation [9] below. If the test fails, and it is therefore determined that a watermark is not present, the 'counter' step is by-passed, as shown.

$$IF\left(\frac{\overline{m}_1}{\overline{m}_2} >= A\ \&\&\ \frac{\sigma_1}{\sigma_2} <= B\right) THEN\ COUNTER++ \qquad [9]$$

The method then repeats, if it has not completed the process for all 990 coefficients, as shown in step 620, until the whole sequence has been tested. The counter is then preferably divided by four, and then divided by the number of frames and multiplied by 100, as shown in step 622 and equation [10] below.

$$COUNTER = 100 * COUNTER / (4 * (No.\ Frames)) \qquad [10]$$

This provides a result of the percentage probability that the sequence is watermarked.

Referring now to FIG. 7, a flowchart 700 of a method for detecting the tampering of a watermarked video signal using a peak comparison test, as in step 512 of FIG. 5, is shown, in accordance with a preferred embodiment of the present invention.

This test is slightly more computationally intensive than the statistical test, but provides better results over a wider range of attacks to the sequence.

The basis for the method is that if the 990 coefficients, from each repeat of the watermark, are grouped into a frequency distribution, with equal sized bins of one, they will have a unique shape of distribution based on whether they carry a watermark or not.

Computationally, the peak comparison test method is performed by the input coefficients being split into groups of 990 corresponding to the ten possibly watermarked coefficients in each block, per 99-bit repeat of the watermark, as shown in step 702.

The first 990 coefficients are selected, as shown in step 706. The minimum 710 and maximum 708 coefficient values are calculated. The frequency distribution is calculated, as in step 712, for all values between the minimum and maximum.

The locations of all the local maxima 714 are calculated for coefficient values between "zero" and the maximum.

The locations of the two local minima 716 associated with each maxima is calculated. The area of each peak is calculated by summing the frequencies between the two local minima associated with each maxima, as shown in step 718.

Small peaks with areas < C (for example where C~2) are discarded, noting that calculation errors and certain types of attack can sometimes cause extra noise.

The areas of the equivalent negative peaks are calculated, as in step 722, by summing the frequencies between "-1" * the positions of the two local minima associated with each positive peak. The area of each positive peak is compared with its equivalent negative peak, as shown in step 724. If the positive peak has a much greater area, then this indicates the presence of a watermark. A counter is incremented, as shown in step 726 and equation [11] below.

$$IF\ peak+ > A * peak-\ THEN\ COUNTER++ \qquad [11]$$

The counter is divided by the number of positive peaks, in order to normalise it. The value of the first counter is then added to a second counter, which sums the results over the whole sequence. If more frames of the video sequence/signal are received, the process is not finished in step 728 and the process then repeats for subsequent watermark repeats and frames, as in step 706.

Alternatively, if the process is finished in step 728, the second counter is finally divided by four, then divided by the number of frames and multiplied by 100 to give a percentage probability of watermark presence, as shown in step 730 and equation [12] below.

$$COUNTER_2 = 100 * COUNTER_2 / (4 * (No.\ Frames)) \qquad [12]$$

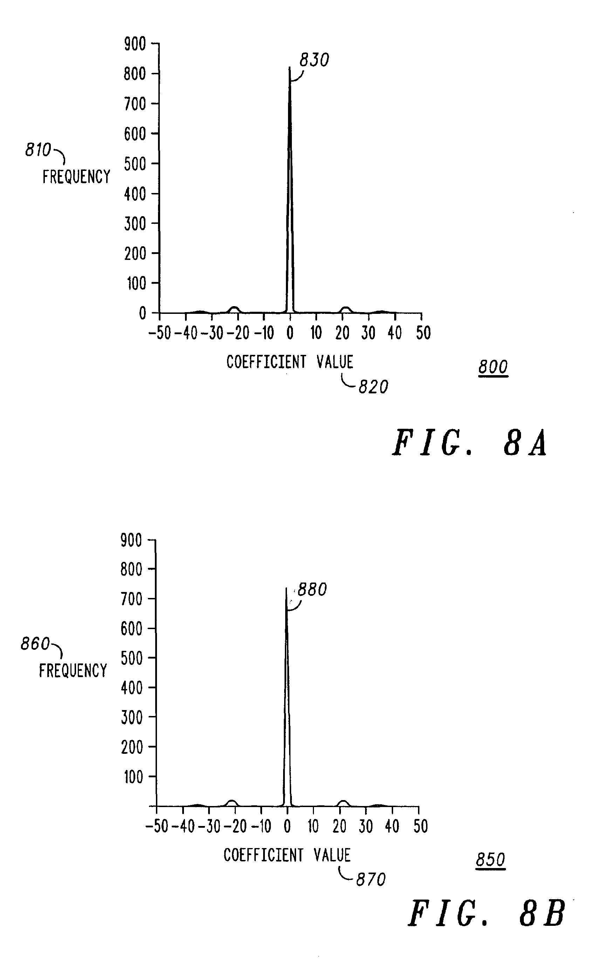

Referring now to FIG. 8, graph 8a shows the frequencies of 990 coefficients without a watermark 800, and Graph 8b shows the coefficients with a watermark 850. Graphs 8a and 8b are shown with frequency 810, 860, plotted against co-efficient value 820, 870.

In an un-watermarked sequence, it is expected that there will be approximately equal amounts of rounding-down to those of rounding-up. Consequently, it is expected that the peaks on the negative side of the graph will have the same areas as the corresponding peak on the positive side (the quantiser ensures that the locations of the peaks on either side of "zero" are equal).

However, if the sequence has been watermarked, it is expected that at least one of the peaks on the positive side will be much larger than its equivalent peak on the negative side.

Table 1 shows a series of results from both of the tests for determining the presence of a watermark. The results show how the two tests react to various kinds of tampering applied to all frames within the sequence.

Table 1: Watermark Presence Results

| Tamper | WITH WATERMARK | | WITHOUT WATERMARK | |
|---|---|---|---|---|
| | Statistical mean / variance Test | Peak comparison Test | Statistical mean / variance Test | Peak comparison Test |
| NONE | 96% | 98% | 0% | 35% |
| Crimmins' Noise Removal | 0% | 77% | 0% | 35% |
| 3*3 Median | 3% | 73% | 0% | 35% |
| Sharpen (High-Pass) | 98% | 98% | 0% | 35% |
| Low-Pass | 45% | 75% | 0% | 5% |
| Resample (bilinear) | 0% | 54% | 0% | 7% |

The inventors have found through extensive testing that, when the watermark is reconstructed from the four repeats, the reconstruction is identical to the original watermark. This means that an even better approximation to the area affected by the tampering can be found by repeating the reconstructed watermark four times and mapping it back to the locations in the frame. The mapping of the four repeats is then subtracted to form an image showing the locations of the attack within the frame.

It is within the contemplation of the invention that the inventive concepts described herein can be applied to any video format such as CIF, 4CIF and subQCIF, etc. and is not therefore limited to the QCIF format described above.

In order to improve the accuracy of the results from the 'peak comparison' test or the statistical 'mean/variance' test when a re-sampling style attack is suspected, the number of coefficients selected from each DCT block could be increased to include those coefficients that would not normally have a watermark applied. This improves the accuracy of the result as the effect of a re-sampling type attack tends to be that the DCT coefficients are moved within the frame. A watermarked coefficient would not necessarily be moved to a location that would normally be in the ten possible watermark locations. Thus, expanding the search area should improve the results, whilst not altering the validity of the method.

As mentioned previously, either of the two tests for watermark presence could be built into a stand-alone application. If this application were publicly available, then the method would become a so-called 'public' watermarking system, as anyone could use the application to test their media for presence of a watermark. However, the application would not give away any information on the watermark's contents or location of the watermark. The privately known user key would be required to locate and recover the actual watermark.

It is within the contemplation of the present invention that the aforementioned inventive concepts may be applied to any video communication unit and/or video transmission system. In particular, the inventive concepts find particular use in wireless (radio) devices such as mobile telephones / mobile radio units and associated wireless communication systems. Such wireless communication units may include a portable or mobile PMR radio, a personal digital assistant, a lap-top computer or a wirelessly networked PC.

Scalable video system technology may be implemented in the 3rd generation (3G) of digital cellular telephones, commonly referred to as the Universal Mobile Telecommunications Standard (UMTS). Scalable video system technology may also find applicability in the packet data variants of both the current 2nd generation of cellular telephones, commonly referred to as the general packet-data radio system (GPRS) and the TErrestrial Trunked RAdio (TETRA) standard for digital private and public mobile radio systems.

Furthermore, scalable video system technology may also be utilised in the Internet. MPEG-4 may also adopt watermarking in that particular standard. The aforementioned inventive concepts will therefore find applicability in, and thereby benefit, all these emerging technologies.

It will be understood that the video transmission and watermarking arrangement described above provides the following advantages:

(i) allows a determination to be made as to whether a scalable video sequence has been tampered with;
(ii) provides a good estimate as to the type of attack/tampering performed;
(iii) provides a good estimate of the location of the attack (whether it be the whole sequence or a single frame) ;

(iv) provides an efficient mechanism for verifying the presence of a watermark without requiring a key to extract the watermark, or giving any information away about the location or contents of the watermark; and
(v) supports the 'Public' watermarking system concept whereby anyone can verify the presence of a watermark, but only the key-holder is able to extract and read the watermark.

In summary, a method for testing a presence of a watermark in a scalable video sequence for detecting tampering of the scalable video sequence has been provided. The method includes the steps of receiving a scalable video sequence having a plurality of blocks, wherein a number of said plurality of blocks include at least one watermark coefficient. A discrete cosine transform is performed on the received scalable video sequence, thereby recovering a plurality of coefficients associated with one or more block(s) of the video sequence. A number of positive coefficients are compared with a number of negative coefficients from the recovered plurality of coefficients to determine whether the received scalable video sequence has been tampered with.

Furthermore, a method for classifying a type of watermark attack on a scalable video sequence containing a watermark has been described. In particular, such a method has been described in conjunction with the aforementioned method of testing for a presence of a watermark. The method includes the steps of performing a discrete cosine transform on said received scalable video sequence, thereby recovering a plurality of DCT coefficients associated with one or more block(s) of the video sequence; and classifying a type of watermark attack based on a shape of the frequency distribution of positive coefficients into at least one of: high-pass, low-pass, re-sample/crop and re-sample, or non-linear.

In addition, a video transmission system has been described including means for receiving a watermarked video sequence that is operably coupled to means for performing a discrete cosine transform function to recover a plurality of coefficients. The means for performing a discrete cosine transform function is operably coupled to means for comparing said recovered coefficients of the watermarked video sequence output from the discrete cosine transform function to determine evidence of tampering of the watermarked video sequence.

A video communication unit, and a mobile radio device incorporating such a unit, adapted to operate in the aforementioned video transmission system or perform the aforementioned method steps has also been described.

Generally, the inventive concepts contained herein are equally applicable to any suitable video or image transmission system. Whilst specific, and preferred, implementations of the present invention are described above, it is clear that variations and modifications of such inventive concepts could be readily applied by one skilled in the art.

Thus, an improved arrangement for detecting and quantifying any tampering of a video sequence or image, has been provided, whereby the aforementioned disadvantages with prior art arrangements have been substantially alleviated. Furthermore, if such tampering of a video sequence or image was found, a mechanism has been provided to localise and classify the tampering attack.

## Claims

1. A method for testing (500, 600, 700) a presence of a watermark in a received scalable video sequence, for detecting tampering of the scalable video sequence, the scalable video sequence including at least an enhancement layer of video signals with at least one watermark coefficient being applied to the enhancement layer, the method **characterised by** the steps of:

   receiving an enhancement layer of the scalable video sequence (502, 602), having a plurality of blocks, wherein a number of said plurality of blocks include at least one watermark coefficient;
   performing a discrete cosine transform on said received enhancement layer, thereby recovering a plurality of coefficients associated with one or more blocks of the video sequence; and
   comparing (506) a number of positive coefficients with a number of negative coefficients from said recovered plurality of coefficients to determine whether said received scalable video sequence (502, 602) has been tampered with.

2. The method for testing a presence of a watermark in a scalable video sequence according to claim 1, wherein the received scalable video sequence further includes a base layer.

3. The method for testing a presence of a watermark in a scalable video sequence according to claim 1, the method further **characterised by** the step of:

   performing at least one of a statistical mean/variance test (504, 600) and a peak comparison test (512, 700) to determine the presence of a watermark.

4. The method for testing a presence of a watermark in a scalable video sequence according to claim 3, by performing the statistical mean/variance test (504, 600), the method further **characterised by** the steps of:

   determining first a variance (612) and an absolute mean (abs(mean)) (610) of the negative coefficients; and
   determining second a variance (612) and an abs(mean) (610) of the positive coefficients;
   wherein if said first and said second determinations are equal (614, 616), deciding that the received scalable video sequence contained no watermark.

5. The method for testing a presence of a watermark in a scalable video sequence according to claim 3, by performing the peak comparison test (512, 700), the method further **characterised by** the steps of:

   grouping (712) the recovered coefficients into a frequency distribution; and
   determining (724) that the scalable video sequence contained a watermark based on a shape of said frequency distribution.

6. The method for testing a presence of a watermark in a scalable video sequence according to claim 5, the method further **characterised by** the steps of:

   assuming the scalable video sequence contained a watermark if the determination of positive coefficients is greater than said determination of negative coefficients; or
   assuming either the scalable video sequence did not contain a watermark, or the watermark of the scalable video sequence had been attacked if the determination of negative coefficients is greater than or equal to said determination of positive coefficients.

7. The method for testing a presence of a watermark in a scalable video sequence according to any of claims 4 to 6, the method further **characterised by** the step of:

   comparing a result from the peak comparison test (512, 700) or the statistical mean/variance test (504, 600) to a threshold to determine whether the whole scalable video sequence has been subjected to a watermark attack.

8. The method for testing a presence of a watermark in a scalable video sequence according to any of claims 4 to 7, the method further **characterised by** the steps of:

   increasing the number of coefficients selected from one or more block(s) of the scalable video sequence in order to improve an accuracy in the watermark determination from the peak comparison test (512, 700) or the statistical mean/variance test (504, 600) when, for example, a re-sampling style attack is suspected.

9. The method for testing a presence of a watermark in a scalable video sequence according to any of claims 4 to 8, the method further **characterised by** the steps of:

   performing a bit-by-bit analysis (530) on the received scalable video sequence; and
   deciding whether each received bit has been correctly received, and at least one of:

   subtracting, if the original watermark is known, the recovered watermark from the original watermark in each frame;
   summing the number of bits in error to calculate a bit error rate for the scalable video sequence;
   combining a number of recovered watermarks within the sequence, if the original watermark was not available and each frame in the sequence was watermarked with the same watermark pattern, in order to calculate a bit error rate for the scalable video sequence; and
   subtracting a recovered watermark from each repeat of that watermark in a frame, if each frame of the sequence was watermarked with a different watermark, to calculate a bit error rate for the scalable video sequence.

10. The method for testing a presence of a watermark in a scalable video sequence according to any of claims 4 to 9, the method further **characterised by** the step of:

   comparing a calculated bit error rate to an expected bit error rate for each received video frame to determine whether the video frame has been tampered with.

11. A method for classifying (520) a type of watermark attack on a scalable video sequence containing a watermark, the method comprising:

testing for the presence of a watermark in the scalable video sequence according to the method of any preceding claim; and
classifying a type of watermark attack (520) based on a shape of the frequency distribution of positive coefficients into at least one of: high-pass, low-pass, re-sample/crop and re-sample, and non-linear.

12. The method for classifying a type of watermark attack on a scalable video sequence according to claim 11, the method further including the steps of:

taking each DCT coefficient;
generating a frequency distribution of the DCT coefficients; and
classifying said attack as a high-pass filter type attack when the frequency distribution range is found to have increased; or
classifying said attack as a low-pass filter type attack when the frequency distribution range is found to have decreased.

13. The method for classifying a type of watermark attack on a scalable video sequence according to claim 11, the method further **characterised by** the steps of:

(i) classifying said attack as a re-sample/crop type attack when locations of the peaks in the frequency distribution of the coefficients are distributed differently to that expected;
(ii) classifying said attack as a non-linear attack when peaks in the frequency distribution of the coefficients tend towards a series of small peaks, with a primary peak around zero being reduced in height/area to that expected.

14. A video communication unit for testing for a presence of a watermark in a received scalable video sequence, for detecting tampering of the scalable video sequence, the received scalable video sequence including at least an enhancement layer of video signals with at least one watermark coefficient being applied to the enhancement layer, the video communication unit comprising:

means for receiving an enhancement layer of the scalable video sequence, the enhancement layer including at least one watermark coefficient;
the means for receiving being operably coupled to means for performing a discrete cosine transform function on the received enhancement layer to recover a plurality of coefficients;
the means for performing a discrete cosine transform function being operably coupled to comparing means for comparing said recovered coefficients (502, 602) output from the means for performing a discrete cosine transform function, said comparing means for comparing a number of positive coefficients with a number of negative coefficients from said recovered plurality of coefficients to determine evidence of tampering of the received scalable video sequence.

15. A video communication unit according to claim 14, wherein the received scalable video sequence is a scalable video bit stream, the scalable video bit stream further including a base layer of video signals.

16. A mobile radio device comprising a video communication unit in accordance with claim 14 or 15, the mobile radio device being a mobile phone, a portable or mobile PMR radio, a personal digital assistant, a lap-top computer or a wirelessly networked PC.

17. A video transmission system comprising:

a transmission unit for transmitting a watermarked scalable video sequence; and
a video communication unit as claimed in any one of clams 14 to 16 for receiving the watermarked scalable video sequence.

**Patentansprüche**

1. Verfahren zur Überprüfung (500, 600, 700) eines Vorhandenseins eines Wasserzeichens in einer empfangenen skalierbaren Videosequenz, zur Erfassung eines unbefugten Zugriffs auf die skalierbare Videosequenz, wobei die skalierbare Videosequenz wenigstens eine Anreicherungsschicht aus Videosignalen aufweist, wobei wenigstens ein Wasserzeichenkoeffizient auf die Anreicherungsschicht angewandt wird, wobei das Verfahren durch die folgenden Schritte gekennzeichnet ist:

Empfangen einer Anreicherungsschicht der skalierbaren Videosequenz (502, 602), mit einer Mehrzahl von Blöcken, wobei eine Reihe der Mehrzahl von Blöcken wenigstens einen Wasserzeichenkoeffizienten aufweist; Ausführen einer diskreten Cosinus-Transformation auf der empfangenen Anreicherungsschicht, wodurch eine Mehrzahl von mit einem oder mehreren Blöcken der Videosequenz verbundenen Koeffizienten wiederhergestellt wird; und
Vergleichen (506) einer Reihe von positiven Koeffizienten mit einer Reihe von negativen Koeffizienten aus der wiederhergestellten Mehrzahl von Koeffizienten, um festzulegen, ob auf die empfangene skalierbare Videosequenz (502, 602) unbefugt zugegriffen wurde.

2. Verfahren zur Überprüfung eines Vorhandenseins eines Wasserzeichens in einer skalierbaren Videosequenz nach Anspruch 1, wobei die empfangene skalierbare Videosequenz ferner eine Basisschicht aufweist.

3. Verfahren zur Überprüfung eines Vorhandenseins eines Wasserzeichens in einer skalierbaren Videosequenz nach Anspruch 1, wobei das Verfahren ferner durch den folgenden Schritt gekennzeichnet ist:

Ausführen wengistens einer statistischen Mittelwert-/Streuungsprüfung (504, 600) oder einer Spitzen-Vergleichsprüfung (512, 700), um das Vorhandensein eines Wasserzeichens festzulegen.

4. Verfahren zur Überprüfung eines Vorhandenseins eines Wasserzeichens in einer skalierbaren Videosequenz nach Anspruch 3, durch Ausführen der statistischen Mittel-wert-/Streuungsprüfung (504, 600), wobei das Verfahren ferner durch die folgenden Schritte gekennzeichnet ist:

erstes Festlegen einer Streuung (612) und eines absoluten Mittelwerts (abs(mean)) (610) der negativen Koeffizienten; und
zweites Festlegen einer Streuung (612) und eines abs(mean) (610) der positiven Koeffizienten;
wobei, wenn die ersten und zweiten Festlegungen gleich sind (614, 616), entschieden wird, dass die empfangene skalierbare Videosequenz kein Wasserzeichen enthält.

5. Verfahren zur Überprüfung eines Vorhandenseins eines Wasserzeichens in einer skalierbaren Videosequenz nach Anspruch 3, durch Ausführen der Spitzen-Vergleichsprüfung (512, 700), wobei das Verfahren ferner durch die folgenden Schritte gekennzeichnet ist:

Gruppieren (712) der wiederhergestellten Koeffizienten zu einer Häufigkeitsverteilung; und
Festlegen (724), dass die skalierbare Videosequenz ein Wasserzeichen enthält, basierend auf einer Form der Häufigkeitsverteilung.

6. Verfahren zur Überprüfung eines Vorhandenseins eines Wasserzeichens in einer skalierbaren Videosequenz nach Anspruch 5, wobei das Verfahren ferner durch die folgenden Schritte gekennzeichnet ist:

Annehmen, dass die skalierbare Videosequenz ein Wasserzeichen enthält, wenn die Festlegung von positiven Koeffizienten größer als die Festlegung negativer Koeffizienten ist; oder
Annehmen, dass entweder die skalierbare Videosequenz kein Wasserzeichen enthält, oder dass das Wasserzeichen der skalierbaren Videosequenz angegriffen wurde, wenn die Festlegung von negativen Koeffizienten größer als die Festlegung von positiven Koeffizienten ist oder dieser entspricht.

7. Verfahren zur Überprüfung eines Vorhandenseins eines Wasserzeichens in einer skalierbaren Videosequenz nach einem der Ansprüche 4 bis 6, wobei das Verfahren ferner durch den folgenden Schritt gekennzeichnet ist:

Vergleichen eines Ergebnisses aus der Spitzen-Vergleichsprüfung (512, 700) oder der statistischen Mittel-wert-/Streuungsprüfung (504, 600) mit einem Schwellwert, um festzulegen, ob die gesamte skalierbare Videosequenz einem Wasserzeichenangriff ausgesetzt wurde.

8. Verfahren zur Überprüfung eines Vorhandenseins eines Wasserzeichens in einer skalierbaren Videosequenz nach einem der Ansprüche 4 bis 7, wobei das Verfahren ferner durch die folgenden Schritte gekennzeichnet ist:

Erhöhen der Anzahl von Koeffizienten, die aus einem Block oder mehreren Blöcken der skalierbaren Videosequenz ausgewählt ist, um eine Genauigkeit bei der Wasserzeichen-Festlegung aus der Spitzen-Vergleichsprüfung (512, 700) oder der statistischen Mittelwert-/Streuungsprüfung (504, 600) zu verbessern, wenn beispielsweise ein Angriff nach Resampling-Art vermutet wird.

9. Verfahren zur Überprüfung eines Vorhandenseins eines Wasserzeichens in einer skalierbaren Videosequenz nach einem der Ansprüche 4 bis 8, wobei das Verfahren ferner durch die folgenden Schritte gekennzeichnet ist:

Ausführen einer Bit-für-Bit-Analyse (530) auf der empfangenen skalierbaren Videosequenz; und
Entscheiden, ob jedes empfangene Bit korrekt empfangen wurde, und durch wenigstens einen der folgenden Schritte:

Subtrahieren, wenn das ursprüngliche Wasserzeichen bekannt ist, des wiederhergestellten Wasserzeichens von dem ursprünglichen Wasserzeichen in jedem Rahmen;
Addieren der Anzahl von fehlerhaften Bits, um eine Bit-Fehlerrate für die skalierbare Videosequenz zu berechnen;
Kombinieren einer Anzahl von wiederhergestellten Wasserzeichen innerhalb der Sequenz, wenn das ursprüngliche Wasserzeichen nicht verfügbar war und jeder Rahmen in der Sequenz mit demselben Wasserzeichen-Muster versehen wurde, um eine Bit-Fehlerrate für die skalierbare Videosequenz zu berechnen; und
Subtrahieren eines wiederhergestellten Wasserzeichens von jeder Wiederholung dieses Wasserzeichens in einem Rahmen, wenn jeder Rahmen der Sequenz mit einem anderen Wasserzeichen versehen wurde, um eine Bit-Fehlerrate für die skalierbare Videosequenz zu berechnen.

10. Verfahren zur Überprüfung eines Vorhandenseins eines Wasserzeichens in einer skalierbaren Videosequenz nach einem der Ansprüche 4 bis 9, wobei das Verfahren ferner durch den folgenden Schritt gekennzeichnet ist:

Vergleichen einer berechneten Bit-Fehlerrate mit einer erwarteten Bit-Fehlerrate bei jedem empfangenen Videorahmen, um festzulegen, ob unbefugt auf den Videorahmen zugegriffen wurde.

11. Verfahren zur Klassifizierung (520) einer Art eines Wasserzeichenangriffs auf eine skalierbare Videosequenz, die ein Wasserzeichen enthält, wobei das Verfahren Folgendes aufweist:

Überprüfen des Vorhandenseins eines Wasserzeichens in der skalierbaren Videosequenz gemäß dem Verfahren nach einem der vorhergehenden Ansprüche; und
Klassifizieren einer Art eines Wasserzeichenangriffs (520) basierend auf einer Form der Häufigkeitsverteilung von positiven Koeffizienten in wenigstens eine der folgenden Arten: Hochpass, Tiefpass, Resampling/Freistellen und Resampling und nicht-linearer Angriff.

12. Verfahren zur Klassifizierung einer Art eines Wasserzeichenangriffs auf eine skalierbare Videosequenz nach Anspruch 11, wobei das Verfahren ferner die folgenden Schritte aufweist:

Nehmen eines jeden DCT-Koeffizienten;
Erzeugen einer Häufigkeitsverteilung der DCT-Koeffizienten; und
Klassifizieren des Angriffs als Angriff nach Hochpassfilter-Art, wenn sich herausgestellt hat, dass sich der Häufigkeitsverteilungsbereich erhöht hat; oder
Klassifizieren des Angriffs als Angriff nach Tiefpassfilter-Art, wenn sich herausgestellt hat, dass sich der Häufigkeitsverteilungsbereich verringert hat.

13. Verfahren zur Klassifizierung einer Art eines Wasserzeichenangriffs auf eine skalierbare Videosequenz nach Anspruch 11, wobei das Verfahren ferner durch die folgenden Schritte gekennzeichnet ist:

(i) Klassifizieren des Angriffs als Angriff nach Resampling/Freistellen-Art, wenn Positionen der Spitzen bei der Häufigkeitsverteilung der Koeffizienten anders als die Erwarteten verteilt werden;
(ii) Klassifizieren des Angriffs als nicht-linearer Angriff, wenn Spitzen bei der Häufigkeitsverteilung der Koeffizienten zu einer Reihe von kleinen Spitzen tendieren, wobei die Höhe/ Fläche einer Hauptspitze um null auf das Erwartete verringert wird.

**14.** Videokommunikationseinheit zur Überprüfung eines Vorhandenseins eines Wasserzeichens in einer empfangenen skalierbaren Videosequenz, zur Erfassung eines unbefugten Zugriffs auf die skalierbare Videosequenz, wobei die empfangene skalierbare Videosequenz wenigstens eine Anreicherungsschicht aus Videosignalen aufweist, wobei wenigstens ein Wasserzeichenkoeffizient auf die Anreicherungsschicht angewandt wird, wobei die Videokommunikationseinheit Folgendes aufweist:

ein Mittel zum Empfangen einer Anreicherungsschicht der skalierbaren Videosequenz, wobei die Anreicherungsschicht wenigstens einen Wasserzeichenkoeffizienten aufweist;
wobei das Mittel zum Empfangen mit dem Mittel zum Ausführen einer diskreten Cosinus-Transformationsfunktion auf der empfangenen Anreicherungsschicht zur Wiederherstellung einer Mehrzahl von Koeffizienten wirkverbunden ist;
wobei das Mittel zum Ausführen einer diskreten Cosinus-Transformationsfunktion mit dem Vergleichsmittel zum Vergleichen der aus dem Mittel zum Ausführen einer diskreten Cosinus-Transformationsfunktion ausgegebenen wiederhergestellten Koeffizienten (502, 602) wirkverbunden ist, wobei das Vergleichsmittel zum Vergleichen einer Reihe positiver Koeffizienten mit einer Reihe negativer Koeffizienten aus der wiederhergestellten Mehrzahl von Koeffizienten Beweise für unbefugten Zugriff auf die empfangene skalierbare Videosequenz festlegt.

**15.** Videokommunikationseinheit nach Anspruch 14, wobei die empfangene skalierbare Videosequenz ein skalierbarer Video-Bitstrom ist, wobei der skalierbare Video-Bitstrom ferner eine Basisschicht aus Videosignalen aufweist.

**16.** Mobile Funkvorrichtung, mit einer Videokommunikationseinheit nach Anspruch 14 oder 15, wobei die mobile Funkvorrichtung ein Mobiltelefon, ein tragbares oder mobiles PMR-Funkgerät, ein persönlicher digitaler Assistent, ein Laptop-Computer oder ein drahtlos vernetzter PC ist.

**17.** Videoübertragungssystem, mit:

einer Übertragungseinheit zur Übertragung einer mit einem Wasserzeichen versehenen skalierbaren Videosequenz; und
einer Videokommunikationseinheit nach einem der Ansprüche 14 bis 16 zum Empfang der mit einem Wasserzeichen versehenen skalierbaren Videosequenz.

## Revendications

**1.** Procédé de test (500, 600, 700) de la présence d'un filigrane dans une séquence vidéo extensible reçue, en vue de détecter une falsification de la séquence vidéo extensible, la séquence vidéo extensible incluant au moins une couche d'optimisation de signaux vidéo, où au moins un coefficient de filigrane est appliqué à la couche d'optimisation, le procédé étant **caractérisé par** les étapes ci-dessous consistant à :

recevoir une couche d'optimisation de la séquence vidéo extensible (502, 602), présentant une pluralité de blocs, dans lequel un nombre de ladite pluralité de blocs inclut au moins un coefficient de filigrane ;
mettre en oeuvre une transformée en cosinus discrète sur ladite couche d'optimisation reçue, ce qui permet de récupérer par conséquent une pluralité de coefficients associés à un ou plusieurs blocs de la séquence vidéo ; et
comparer (506) un nombre de coefficients positifs à un nombre de coefficients négatifs à partir de ladite pluralité de coefficients récupérés, en vue de déterminer si ladite séquence vidéo extensible reçue (502, 602) a été falsifiée.

**2.** Procédé de test de la présence d'un filigrane dans une séquence vidéo extensible selon la revendication 1, dans lequel la séquence vidéo extensible reçue inclut en outre une couche de base.

**3.** Procédé de test de la présence d'un filigrane dans une séquence vidéo extensible selon la revendication 1, le procédé étant **caractérisé en outre par** l'étape ci-dessous consistant à :

mettre en oeuvre au moins l'un d'un test de variance / moyenne statistique (504, 600) et un test de comparaison de crête (512, 700) en vue de déterminer la présence d'un filigrane.

**4.** Procédé de test de la présence d'un filigrane dans une séquence vidéo extensible selon la revendication 3, dans lequel est mis en oeuvre le test de variance / moyenne statistique (504, 600), le procédé étant **caractérisé en outre par** les étapes ci-dessous consistant à :

déterminer premièrement une variance (612) et une moyenne absolue (abs(mean)) (610) des coefficients négatifs ; et
déterminer deuxièmement une variance (612) et une moyenne absolue abs(mean) (610) des coefficients positifs ;
dans lequel, si lesdites première et seconde déterminations sont égales (614, 616), déterminer que la séquence vidéo extensible reçue ne contenait pas de filigrane.

**5.** Procédé de test de la présence d'un filigrane dans une séquence vidéo extensible selon la revendication 3, dans lequel est mis en oeuvre le test de comparaison de crête (512, 700), le procédé étant **caractérisé en outre par** les étapes ci-dessous consistant à :

regrouper (712) les coefficients récupérés dans une distribution de fréquence ; et
déterminer (724) que la séquence vidéo extensible contenait un filigrane, sur la base d'une forme de ladite distribution de fréquence.

**6.** Procédé de test de la présence d'un filigrane dans une séquence vidéo extensible selon la revendication 5, le procédé étant **caractérisé en outre par** les étapes ci-dessous consistant à :

supposer que la séquence vidéo extensible filigrane contenait un filigrane si la détermination de coefficients positifs est supérieure à ladite détermination de coefficients négatifs ; ou
supposer que la séquence vidéo extensible ne contenait pas de filigrane ou que le filigrane de la séquence vidéo extensible avait été attaqué, si la détermination de coefficients négatifs est supérieure ou égale à ladite détermination de coefficients positifs.

**7.** Procédé de test de la présence d'un filigrane dans une séquence vidéo extensible selon l'une quelconque des revendications 4 à 6, le procédé étant **caractérisé en outre par** l'étape ci-dessous consistant à :

comparer un résultat du test de comparaison de crête (512, 700) ou du test de variance / moyenne statistique (504, 600) à un seuil, en vue de déterminer si la séquence vidéo extensible a été soumise dans son ensemble à une attaque de filigrane.

**8.** Procédé de test de la présence d'un filigrane dans une séquence vidéo extensible selon l'une quelconque des revendications 4 à 7, le procédé étant **caractérisé en outre par** les étapes ci-dessous consistant à :

augmenter le nombre de coefficients sélectionnés à partir d'un ou plusieurs blocs de la séquence vidéo extensible afin d'améliorer une précision de la détermination de filigrane à partir du test de comparaison de crête (512, 700) ou du test de variance / moyenne statistique (504, 600) lorsque, par exemple, une attaque de style « rééchantillonnage » est suspectée.

**9.** Procédé de test de la présence d'un filigrane dans une séquence vidéo extensible selon l'une quelconque des revendications 4 à 8, le procédé étant **caractérisé en outre par** les étapes ci-dessous consistant à :

mettre en oeuvre une analyse bit par bit (530) sur la séquence vidéo extensible reçue ; et
déterminer si chaque bit reçu a été correctement reçu, et **caractérisé par** au moins l'une des étapes ci-dessous consistant à :

soustraire, si le filigrane d'origine est connu, le filigrane récupéré du filigrane d'origine dans chaque trame ;
additionner le nombre de bits erronés en vue de calculer un taux d'erreur sur les bits pour la séquence vidéo extensible ;
combiner un nombre de filigranes récupérés au sein de la séquence, si le filigrane d'origine n'était pas disponible et si chaque trame dans la séquence a été filigranée avec le même motif de filigrane, en vue de calculer un taux d'erreur sur les bits pour la séquence vidéo extensible ; et
soustraire un filigrane récupéré de chaque répétition de ce filigrane dans une trame, si chaque trame de la séquence a été filigranée avec un filigrane distinct, en vue de calculer un taux d'erreur sur les bits pour la séquence vidéo extensible.

**10.** Procédé de test de la présence d'un filigrane dans une séquence vidéo extensible selon l'une quelconque des revendications 4 à 9, le procédé étant **caractérisé en outre par** l'étape ci-dessous consistant à :

comparer un taux d'erreur sur les bits calculé à un taux d'erreur sur les bits attendu pour chaque trame vidéo reçue, en vue de déterminer si la trame vidéo a été falsifiée.

**11.** Procédé de classification (520) d'un type d'attaque de filigrane sur une séquence vidéo extensible contenant un filigrane, le procédé comprenant les étapes ci-dessous consistant à :

tester la présence d'un filigrane dans la séquence vidéo extensible selon le procédé selon l'une quelconque des revendications précédentes ; et
classer un type d'attaque de filigrane (520) sur la base d'une forme de la distribution de fréquence de coefficients positifs, dans au moins l'un des types d'attaque suivants : passe-haut, passe-bas, et rééchantillonnage / recadrage et rééchantillonnage, et non linéaire.

**12.** Procédé de classification d'un type d'attaque de filigrane sur une séquence vidéo extensible selon la revendication 11, le procédé comprenant en outre les étapes ci-dessous consistant à :

prendre chaque coefficient de transformée DCT ;
générer une distribution de fréquence des coefficients de transformée DCT ; et
classer ladite attaque en tant qu'une attaque de type filtre passe-haut lorsqu'il est constaté que la plage de distribution de fréquence a augmenté ; ou
classer ladite attaque en tant qu'une attaque de type filtre passe-bas lorsqu'il est constaté que la plage de distribution de fréquence a diminué.

**13.** Procédé de classification d'un type d'attaque de filigrane sur une séquence vidéo extensible selon la revendication 11, le procédé étant **caractérisé en outre par** les étapes ci-dessous consistant à :

(i) classer ladite attaque en tant qu'une attaque de type rééchantillonnage / recadrage lorsque des emplacements des crêtes dans la distribution de fréquence des coefficients sont distribués différemment de ce qui est attendu ;
(ii) classer ladite attaque en tant qu'une attaque non linéaire lorsque des crêtes dans la distribution de fréquence des coefficients tendent vers une série de petites crêtes, où une crête principale proche de zéro est réduite en hauteur / surface par rapport à ce qui est attendu.

**14.** Unité de communication vidéo destinée à tester la présence d'un filigrane dans une séquence vidéo extensible reçue, en vue de détecter une falsification de la séquence vidéo extensible, la séquence vidéo extensible reçue incluant au moins une couche d'optimisation de signaux vidéo où au moins un coefficient de filigrane est appliqué à la couche d'optimisation, l'unité de communication vidéo comprenant :

un moyen pour recevoir une couche d'optimisation de la séquence vidéo extensible, la couche d'optimisation incluant au moins un coefficient de filigrane ;
le moyen de réception étant couplé de manière opérationnelle à un moyen pour mettre en oeuvre une fonction de transformée en cosinus discrète sur la couche d'optimisation reçue, en vue de récupérer une pluralité de coefficients ;
le moyen de mise en oeuvre d'une fonction de transformée en cosinus discrète étant couplé de manière opérationnelle à un moyen de comparaison destiné à comparer lesdits coefficients récupérés (502, 602) générés en sortie à partir du moyen de mise en oeuvre d'une fonction de transformée en cosinus discrète, ledit moyen de comparaison étant destiné à comparer un nombre de coefficients positifs à un nombre de coefficients négatifs à partir de ladite pluralité de coefficients récupérés, en vue de déterminer une preuve de falsification de la séquence vidéo extensible reçue.

**15.** Unité de communication vidéo selon la revendication 14, dans laquelle la séquence vidéo extensible reçue est un flux binaire vidéo extensible, le flux binaire vidéo extensible incluant en outre une couche de base de signaux vidéo.

**16.** Dispositif radio mobile comprenant une unité de communication vidéo selon la revendication 14 ou 15, le dispositif radio mobile étant un téléphone mobile, une radio PMR mobile ou portable, un assistant numérique personnel, un ordinateur portable ou un ordinateur personnel en réseau sans fil.

17. Système de transmission vidéo, comportant :

une unité de transmission destinée à transmettre une séquence vidéo extensible filigranée ; et
une unité de communication vidéo selon l'une quelconque des revendications 14 à 16, destinée à recevoir la séquence vidéo extensible filigranée.

*FIG. 1*

*FIG. 3*

ENHANCEMENT
LAYER

BASE LAYER

*FIG. 4*

ENHANCEMENT
LAYER

BASE LAYER

FIG. 2

*FIG. 5*

*500*

502

```
┌──────────────────────────────────┐
│ TEST FOR WATERMARK PRESENCE:      │─504
│ STATISTICAL MEAN/VARIANCE TEST    │
└──────────────────────────────────┘
```

506

X>50% ?  ── FALSE ──→ TEST FOR WATERMARK PRESENCE: PEAK COMPARISON TEST ─512

TRUE

510
KEY

514
Y>50% ?

TRUE

RECOVERY OF WATERMARKED COEFFICIENTS ─508

FALSE

WATERMARK PROBABLY NOT PRESENT OR WATERMARK ATTACKED AND DAMAGED ─516

USER MUST DECIDE WHETHER TO CONTINUE

530
BIT CLASSIFICATION AND RECOVERY

518
X OR Y<85% ?  ── TRUE ──→

520
ATTACK CLASSIFICATION TEST:
• HIGH-PASS
• LOW-PASS
• RESAMPLE
• NON-LINEAR

FALSE

522
TEST FOR HIGH-PASS FILTERING OR SHARPENING ── FAIL ──→

524
SEQUENCE HAS PROBABLY BEEN HIGH-PASS FILTERED OR SHARPENED

PASS

526
ATTACK PROBABLY NOT CARRIED OUT OVER WHOLE SEQUENCE

532
WORSE THAN EXPECTED RECOVERY ? ── TRUE ──→

534
LOCALIZATION OF ATTACK:
-POSITION IN FRAME(S)
-POSITION IN TIME
(FRAME REMOVAL)

FALSE

536
PROBABLY NO TAMPERING/ATTACK

COMBINED BASE AND ENHANCEMENT
OR ENHANCEMENT ONLY
DCT COEFFICIENTS — 602

SPLIT CEOFFICIENTS
INTO GROUPS OF 990 — 604

SELECT COEFFICIENTS — 606

SORT COEFFICIENTS — 608

610 — CALCULATE MEANS

612 — CALCULATE VARIANCES

CALCULATE RATIOS — 614

616 — TEST RATIOS — FAIL

PASS

618 — COUNTER++

620 — FINISHED?

NO

YES

COUNTER=100 * COUNTER /
(4*(No. FRAMES)) — 622

600

OUT

*FIG. 6*

IN

702

$$\boxed{\text{SPLIT COEFFICIENTS} \atop \text{INTO GROUPS OF 990}} \text{—704}$$

$$\boxed{\text{SELECT COEFFICIENTS}} \text{—706}$$

708

$$\boxed{\text{CALCULATE MAXIMUM} \atop \text{COEFFICIENT VALUE}}$$

710

$$\boxed{\text{CALCULATE MINIMUM} \atop \text{COEFFICIENT VALUE}}$$

$$\boxed{\text{GROUP INTO FREQUENCY} \atop \text{DISTRIBUTION WITH BINS FROM} \atop \text{THE MINIMUM TO MAXIMUM}} \text{—712}$$

714

$$\boxed{\text{CALCULATE POSITIONS} \atop \text{OF LOCAL MAXIMA}}$$

716

$$\boxed{\text{CALCULATE POSITIONS} \atop \text{OF LOCAL MINIMA}}$$

$$\boxed{\text{CALCULATE AREAS OF} \atop \text{PEAKS BETWEEN MINIMA}} \text{—718}$$

$$\boxed{\text{DISCARD SMALL PEAKS}} \text{—720}$$

$$\boxed{\text{CALCULATE AREAS OF} \atop \text{EQUIVALENT-VE PEAKS}} \text{—722}$$

724

COMPARE
PEAK AREAS
?

FAIL

PASS

$$\boxed{\text{COUNTER++}} \text{—726}$$

728

NO

FINISHED?

YES

$$\underline{700}$$

$$\boxed{\text{COUNTER}_2 = 100 * \text{COUNTER}_2 / \atop (4*(\text{No. FRAMES}))} \text{—730}$$

*FIG. 7*

810
FREQUENCY

900
800
700
600
500
400
300
200
100
0

830

-50 -40 -30 -20 -10  0  10  20  30  40  50

COEFFICIENT VALUE

800

820

FIG. 8A

860
FREQUENCY

900
800
700
600
500
400
300
200
100

880

-50 -40 -30 -20 -10  0  10  20  30  40  50

COEFFICIENT VALUE

850

870

FIG. 8B

910 —
FREQUENCY

930

940

950

—— NO FILTER
———HIGH PASS

COEFFICIENT VALUE

920

900

*FIG. 9*

1010 —
FREQUENCY

1030

1050

1040

—— NO FILTER
——— LOW PASS

COEFFICIENT VALUE

1020

1000

*FIG. 10*

FIG. 11

FIG. 12

29

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2335816 A
- GB 2351405 A
- JP 2000175161 A
- WO 0031085 A

**Non-patent literature cited in the description**

- **RUANAIDH ; DOWLING ; BOLAND.** Perceptual Watermarks of Digital Images. *Proceedings of the IEEE INTCONF Image Processing*
- **R. WOLFGANG ; C. PODILCHUK ; E. DELP.** Perceptual Watermarks of Digital Images. *Proceedings of the IEEE INTCONF Image Processing*